(19) Europäisches Patentamt

European Patent Office

Office européen des brevets

(11) **EP 1 496 154 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
*D21G 9/00* (2006.01)       *D21D 5/02* (2006.01)
*D21D 1/40* (2006.01)       *D21B 1/32* (2006.01)

(21) Anmeldenummer: **04013614.5**

(22) Anmeldetag: **09.06.2004**

(54) **Verfahren zur Bestimmung des bei der Flotation oder Wäsche einer Papierfasersuspension auftretenden Feststoff- oder Faserverlustes**

Process for determining the loss of solid material or fibres during washing or flotation of a fibrous suspension

Procédé pour déterminer les pertes en matière solide ou fibres lors du lavage ou flottation d'une suspension fibreuse

(84) Benannte Vertragsstaaten:
**AT DE FR GB**

(30) Priorität: **11.07.2003 DE 10331488**

(43) Veröffentlichungstag der Anmeldung:
**12.01.2005 Patentblatt 2005/02**

(73) Patentinhaber: **Voith Patent GmbH**
**89522 Heidenheim (DE)**

(72) Erfinder: **Kemper, Martin**
**88250 Weingarten (DE)**

(56) Entgegenhaltungen:
**DE-C- 10 218 265**

## Beschreibung

Die Erfindung betrifft ein Verfahren gemäß dem Oberbegriff des Anspruchs 1 (siehe z.B. des Dokument DE-C 10218265).

Zwei wesentliche Trennverfahren in der Aufbereitung von Papierfaserstoff, der sogenannten Stoffaufbereitung, sind die Flotation und die Eindickung. Auch wenn bei diesen beiden genannten Trennverfahren sehr unterschiedliche physikalische/chemische Mechanismen ablaufen, haben sie gemeinsam, dass sie mit Feststoffverlusten verbunden sind. Feststoffverluste treten dann auf, wenn der Akzept eines Trennverfahrens eine geringere Feststoffmenge hat als der Zulauf zu diesem Trennverfahren. Man spricht auch von einer hohen Ausbeute, wenn der Feststoffverlust gering ist und umgekehrt von einer niedrigen Ausbeute. Es liegt in der Natur der Sache, dass bei einigen Trennverfahren Feststoffverluste in bestimmter Höhe beabsichtigt sind, insbesondere dann, wenn z.B. Störstoffe aus einer Altpapiersuspension entfernt werden. Zusätzlich zu dem beabsichtigten Feststoffverlust können aber auch unbeabsichtigte kommen, d.h. infolge unvermeidbarer Unschärfe werden Stoffe, die eigentlich ihrer Art nach im Akzept erwünscht wären, mit dem Rejekt abgeführt. Bei der Eindickung kann z.B. die reine Wasserentfernung gewünscht werden. Das wäre dann eine Ausbeute von 100 % (die sich real nicht erreichen lässt) oder die Eindickung wird bewusst als Wäsche betrieben, d.h. ein Teil der in der Faserstoffsuspension vorhandenen feinen Partikel soll mit dem Filtrat abgeführt werden.

Der Feststoffverlust ist bei der Beurteilung bzw. Regelung des Trennverfahrens von großer Bedeutung. Es gibt auch Fälle, bei denen nicht der gesamte Feststoffverlust, sondern nur der Faserverlust bestimmt werden soll. Letzterer erfasst nur die organischen brennbaren Feststoffe in der Papierfasersuspension. Die Verluste werden zumeist in % vom entsprechenden Stoff im Zulauf zum Trennverfahren angegeben.

Es ist möglich, den Feststoffverlust mit Hilfe von Labormessungen der Proben im Einlauf und Akzept oder Einlauf und Rejekt und durch Bilanzieren der Messwerte zu bestimmen. Diese an sich bekannte Möglichkeit hat den Nachteil, dass die Werte dieser Bestimmung nicht simultan zu erhalten sind. In der Praxis bedeutet das, bei Vorliegen dieser Werte können sie schon überholt sein. Es kann auch sein, dass bis zum Vorliegen der Werte das Trennverfahren nicht optimal hat gefahren werden können.

Eine Möglichkeit, um ständig aktuelle Werte über die Feststoffverluste zu erhalten, besteht theoretisch auch darin, im Einlauf und im Akzept des Trennverfahrens ständige Volumenstrom- und Stoffdichtemessungen durchzuführen. Durch eine einfache Bilanzierung lässt sich dann der Feststoffverlust ausrechnen. Dieses Verfahren hat jedoch den Nachteil, dass sich Volumenströme und Stoffdichten von Einlauf und Akzept nur gering unterscheiden, wodurch sich Ungenauigkeiten bei der Differenzbildung beträchtlich verstärken. Am besten wäre es natürlich, den entstandenen Verlust ständig direkt im Rejekt zu messen, z.B. durch online -Messung von Volumenstrom und Stoffdichte. Gerade das macht aber bei der hier betrachteten Art der Rejekte beträchtliche Schwierigkeiten, da es sich entweder um lufthaltige Schäume bei der Flotation handelt oder um Filtrate (bei der Eindickung) mit einem relativ geringen Feststoffgehalt.

Der Erfindung liegt daher die Aufgabe zu Grunde, ein Verfahren zur Bestimmung der Feststoffverluste oder der Faserverluste zu schaffen, mit dem es gelingt, relativ schnell und doch ausreichend genau diese Verluste zu bestimmen.

Diese Aufgabe wird durch die im Kennzeichen des Anspruchs 1 genannten Merkmale in Verbindung mit denen des Oberbegriffes gelöst.

Unter Asche wird bekanntlich der nicht brennbare Teil der Papierfasersuspension verstanden (außer dem Wasser). Feinstoffe sind alle feinen Feststoffpartikel, die kleiner als ein bestimmter Wert sind (z.B. kleiner als 1 mm). Bekannte und anerkannte Messmethoden sind in TAPPI T232 cm-85, T 233 cm-95 und T 271 cm-98 beschrieben. Geeignete Sensoren tasten die vorbeiströmende Suspension z.B. optisch ab ("scanning") und bilden daraus den Wert für den Feinstoffgehalt. Ein Beispiel zeigt die DE 69033872 T2.

Durch diese Maßnahmen werden die bisher genannten Nachteile vermieden. Da nämlich die Messung von Asche- oder Feinstoffgehalt auch online oder inline mit relativ genauen Ergebnissen möglich ist, kann der Feststoffverlust in ständig aktualisierter Form berechnet werden. Dabei wird z.B. folgende Formel angewendet:

$$\text{Feststoffverlust} = \frac{\text{Aschegehalt im Einlauf} - \text{Aschegehalt im Akzept}}{\text{Aschegehalt im Rejekt} - \text{Aschegehalt im Akzept}}$$

Wird die Messung des Feinstoffgehaltes zu Grunde gelegt, ergibt sich eine ähnliche Formel, nämlich:

$$\text{Feststoffverlust} = \frac{\text{Feinstoffgehalt im Einlauf} - \text{Feinstoffgehalt im Akzept}}{\text{Feinstoffgehalt im Rejekt} - \text{Feinstoffgehalt im Akzept}}$$

Soll der Faserverlust bestimmt werden, so kann man ihn z. B. aus folgender Formel berechnen:

$$\text{Faserverlust} = \frac{\text{Aschegehalt im Einlauf} - \text{Aschegehalt im Akzept}}{\text{Aschegehalt im Rejekt} - \text{Aschegehalt im Akzept}} \left(1 - \text{Aschegehalt im Rejekt}\right)$$

Günstigerweise werden die Werte von Feinstoff- und Aschegehalt als Masseprozent angegeben, z.B. Gramm-Feinstoff pro Gramm-Gesamtmasse. Die Anzeige erfolgt dann in der Regel in Prozent.

Neben den Möglichkeiten, den ermittelten Verlust ständig anzuzeigen und dadurch manuell in das Trennverfahren eingreifen zu können, kann er auch als Parameter in das Prozessleitsystem für das Trennverfahren eingeführt werden.

Die Erfindung und ihre Vorteile werden erläutert an Hand von Zeichnungen. Dabei zeigen:

Fig. 1    Verfahrensskizze bei Flotation als Trennverfahren;
Fig. 2    Verfahrensskizze bei Eindickung als Trennverfahren.

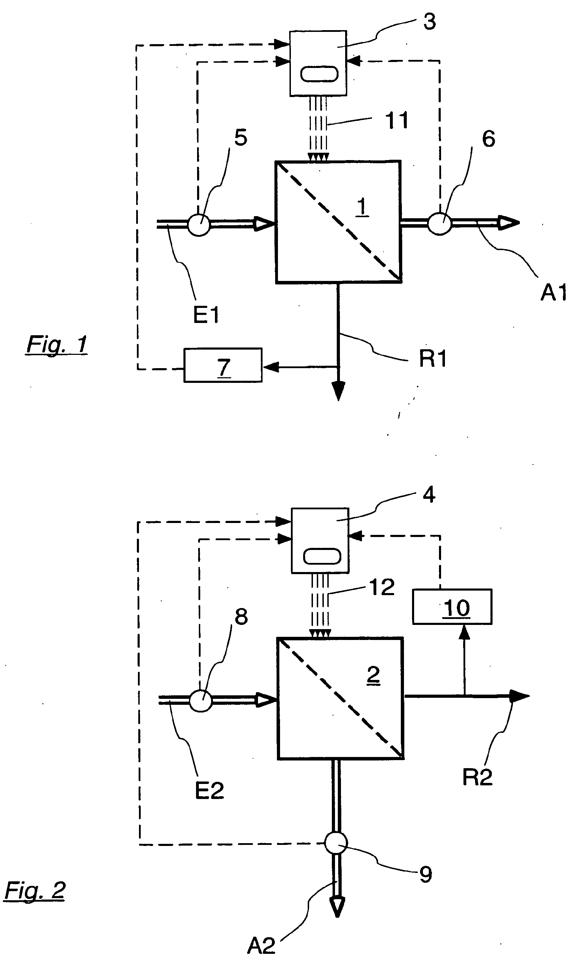

Das in Fig. 1 dargestellte Trennverfahren, nämlich die Flotation 1 läuft so ab, dass die Papierfasersuspension durch den Zulauf E1 in die Flotation eingeführt wird und nach bestimmungsgemäßer Reinigung als Akzept A1 diesen Prozess wieder verlässt. Dabei wird in an sich bekannter Weise ein z.B. mit Druckfarbenpartikeln angereicherter Flotationsschaum als Rejekt R1 gebildet und direkt oder indirekt der Deponie zugeführt. Die Flotation 1 kann aus einer größeren Anzahl von Flotationszellen bzw. Flotationsstufen bestehen. Der Asche- oder Feinstoffanteil des Rejektes R1 wird z.B. durch eine Labormessung 7 bestimmt und der so ermittelte Wert an einen Prozessrechner 3 weitergeleitet. Dabei ist es in der Regel ausreichend, den Feinstoff- oder Ascheanteil des Rejektes R1 in bestimmten Abständen zu messen, da sich dieser erfahrungsgemäß nur wenig ändert.

Wichtig bei der Durchführung des erfindungsgemäßen Verfahrens ist die Ermittlung der Anteile von Asche oder Feinstoff im Zulauf E1 und im Akzept A1. Hierzu dienen die beiden Sensoren 5 und 6. Der Prozessrechner 3 verarbeitet die ermittelten Werte. Er kann mit Vorteil eine Anzeige für den momentan auftretenden Feststoffverlust enthalten. Zusätzlich oder alternativ kann der Prozessrechner 3 aber auch in das Prozessleitsystem integriert sein und z.B. über eine Datenleitung 11 die Flotation optimieren. Eine solche Optimierung bestünde z.B. in der Minimierung des Feststoffverlustes unter Beachtung der geforderten Qualitätswerte im Akzept A1.

Bei einem auf eine Eindickung 2 angewendeten Verfahren, wie in Fig. 2. dargestellt, wird der Akzept A2, gebildet aus dem Einlauf E2, nicht als Durchlauf sondern als Überlauf gewonnen. Damit ist gemeint, dass die für die Papierherstellung benötigten Fasern am Sieb der dazu verwendeten Trennvorrichtung abgewiesen werden und dass das Filtrat, in diesem Falle das Rejekt R2, als Durchlauf einen großen Teil des Wassers und der Feinstoffe oder Asche enthält. Ansonsten kann in analoger Weise verfahren werden, wie es schon an Hand der Fig. 1 erläutert wurde. Über Labormessung 10 wird der Asche- oder Feinstoffanteil des Rejektes R2 ermittelt und an den Regler 4 weitergegeben. Die Sensoren 8 im Einlauf E2 und 9 im Akzept A2 messen ebenfalls entweder den Asche- oder den Feinstoffanteil der entsprechenden Ströme. Der Regler 4 kann geeignet sein, den Wert des nach den bereits angegebenen Vorschriften ermittelten Feststoffverlustes anzuzeigen oder über Datenleitungen 12 zur automatischen Steuerung der Eindickung 2 benutzen. Ob man diesen Trennprozess als Eindickung oder Wäsche bezeichnet, hängt von den beabsichtigten Wirkungen dieses Verfahrensschrittes ab. Wie bereits erwähnt, kann es angestrebt werden, einen möglichst großen Anteil der Feststoffe in der Papierfasersuspension im Akzept zu gewinnen, also eine reine Eindickung durchzuführen oder aber bewusst einen Teil der feinen Feststoffpartikel mit dem Rejekt R2 auszuwaschen. Vorrichtungen, die insbesondere zur Wäsche geeignet sind, sind z.B. aus der DE 197 15 783 oder DE 30 05 681 bekannt.

**Patentansprüche**

1.   Verfahren zur Bestimmung des bei der Flotation (1) oder Eindickung (2) einer Papierfasersuspension auftretenden Feststoff- und/oder Faserverlustes,
     wobei die Papierfasersuspension in der Flotation (1) oder Eindickung (2) aufgeteilt wird in Rejekt (R1, R2) und Akzept (A1, A2) und
     wobei der Anteil von Asche oder Feinstoff im Rejekt (R1, R2) bestimmt wird,
     **dadurch gekennzeichnet,**
     **dass** die Anteile von Asche oder Feinstoff sowohl im Zulauf (E1, E2) der Papierfasersuspensialsals auch im Akzept (A1, A2) inline oder online gemessen werden und dass der Feststoffverlust und/oder der Faserverlust berechnet wird.

**2.** Verfahren nach Anspruch 1,
**dadurch gekennzeichnet,**
**dass** der Feststoffverlust berechnet wird als Quotient, gebildet aus der Differenz zwischen den Anteilen im Zulauf (E1, E2) und Akzept (A1, A2) und aus der Differenz zwischen den Anteilen von Rejekt (R1, R2) und Akzept (A1, A2).

**3.** Verfahren nach Anspruch 1 oder 2,
**dadurch gekennzeichnet,**
**dass** für die Bestimmung des Asche- oder Feinstoffanteils im Rejekt (R1, R2) eine Labormessung (7, 10) durchgeführt wird.

**4.** Verfahren nach Anspruch 1, 2 oder 3,
**dadurch gekennzeichnet,**
**dass** im Zulauf (E1, E2) der Papierfasersuspension und im Akzept (A1, A2) jeweils ein Sensor (5, 6, 8, 9) zur Bestimmung des Asche- oder Feinstoffgehaltes verwendet wird und dass die ermittelten Werte in einem Prozessrechner (3, 4) verarbeitet werden.

**5.** Verfahren nach Anspruch 4,
**dadurch gekennzeichnet,**
**dass** der Prozessrechner (3, 4) die Menge des Feststoff- oder des Faserverlustes anzeigt.

**6.** Verfahren nach Anspruch 4 oder 5,
**dadurch gekennzeichnet,**
**dass** der Prozessrechner über Datenleitungen (11, 12) die Flotation (1) bzw. Wäsche (2) auf einen vorgegebenen Sollwert für den Feststoff- oder den Faserverlust regelt.

**7.** Verfahren nach einem der voranstehenden Ansprüche,
**dadurch gekennzeichnet,**
**dass** der Sensor (5, 6, 8, 9) eine optische Abtastung (scanning) der vorbeiströmenden Suspension vornimmt.

**Claims**

**1.** Method for determining the loss of solids and/or fibres occurring during flotation (1) or thickening (2) of a papermaking pulp suspension,
the papermaking pulp suspension in the flotation (1) or thickening (2) being divided into reject (R1, R2) and accept (A1, A2) and
the proportion of ash or fine material in the reject (R1, R2) being determined,
**characterised in that**
the proportions of ash or fine material both in the inlet (E1, E2) of the papermaking pulp suspension and in the accept (A1, A2) are measured inline or online and **in that** the loss of solids and/or the loss of fibres is calculated.

**2.** Method according to claim 1,
**characterised in that**
the loss of solids is calculated as a quotient, formed from the difference between the proportions in the inlet (E1, E2) and accept (A1, A2) and from the difference between the proportions of reject (R1, R2) and accept (A1, A2).

**3.** Method according to claim 1 or 2,
**characterised in that**
a laboratory measurement (7, 10) is implemented for determination of the proportion of ash or fine material in the reject (R1, R2).

**4.** Method according to claim 1, 2 or 3,
**characterised in that**
a sensor (5, 6, 8, 9) respectively in the inlet (E1, E2) of the papermaking pulp suspension and in the accept (A1, A2) is used to determine the content of ash or fine material and **in that** the determined values are processed in a process computer (3, 4).

**5.** Method according to claim 4,

**characterised in that**
the process computer (3, 4) displays the quantity of loss of solids or fibres.

6. Method according to claim 4 or 5,
**characterised in that**
the process computer controls the flotation (1) or washing (2) to a prescribed nominal value for the loss of solids or fibres via data lines (11, 12).

7. Method according to one of the preceding claims,
**characterised in that**
the sensor (5, 6, 8, 9) undertakes an optical scanning of the suspension flowing past.

**Revendications**

1. Procédé destiné à la détermination de la perte en matières solides et/ou en fibres intervenant dans une suspension de fibres de papier lors de la flottation (1) ou de l'épaississement (2),
11a suspension de fibres de papier étant répartie dans la flottation (1) ou dans l'épaississement (2) en un rejet (R1, R2) et en une fraction acceptée (A1, A2), et
la proportion en cendres ou en fines étant déterminée dans le rejet (R1, R2),
**caractérisé en ce que**
les proportions en cendres ou en fines de la suspension de fibres de papier sont mesurées inline ou online, aussi bien dans l'entrée (E1, E2) que dans la fraction acceptée (A1, A2), et **en ce que** la perte en matières solides et/ou en fibres est calculée.

2. Procédé selon la revendication 1,
**caractérisé en ce que**
la perte en matières solides est calculée en tant que quotient issu de la différence entre les proportions dans l'entrée (E1, E2) et dans la fraction acceptée (A1, A2), et de la différence entre les proportions de rejet (R1, R2) et de fraction acceptée (A1, A2).

3. Procédé selon la revendication 1 ou 2,
**caractérisé en ce que**
une mesure en laboratoire (7, 10) est effectuée pour la détermination de la proportion en cendres ou en fines dans le rejet (R1, R2).

4. Procédé selon la revendication 1, 2 ou 3,
**caractérise en ce que**
un détecteur (5, 6, 8, 9) est respectivement utilisé pour la détermination de la teneur en cendres ou en fines dans l'entrée (E1, E2) de la suspension de fibres de papier et dans la fraction acceptée (A1, A2), et **en ce que** les valeurs déterminées sont traitées dans un ordinateur industriel (3, 4) .

5. Procédé selon la revendication 4,
**caractérisé en ce que**
l'ordinateur industriel (3, 4) affiche la quantité de la perte en matières solides ou en fibres.

6. Procédé salon la revendication 4 ou 5,
**caractérisé en ce que**,
par l'intermédiaire de lignes de transmission de données (11, 12), l'ordinateur industriel règle la flottation (1) ou le lavage (2) sur une valeur de consigne prédéterminée pour la perte en matières solides ou en fibres.

7. Procédé selon l'une des revendications précédentes,
**caractérisé en ce que**
le détecteur (5, 6, 8, 9) effectue un balayage optique (scanning) de la suspension s'écoulant.

*Fig. 1*

*Fig. 2*